# EUROPEAN PATENT SPECIFICATION

(11) **EP 1 390 654 B1**
(45) Date of publication and mention of the grant of the patent: **21.12.2005**
(21) Application number: 02724844.2
(22) Date of filing: 18.04.2002
(51) Int. Cl.: F16L 5/04

(54) **DEVICE AT A FIRE VALVE AND/OR GIREGAS VALVE**
VORRICHTUNG AN EINEM BRANDSCHUTZVENTIL UND/ODER BRENNGASSCHUTZVENTIL
DISPOSITIF SUR CLAPET COUPE-FEU ET/OU SUR CLAPET DE GAZ D'INCENDIE

(30) Priority: 30.04.2001 SE 0101509
(43) Date of publication of application: 25.02.2004
(73) Proprietor: Bröderna Rasch AB, 591 22 Motala (SE)
(72) Inventor: SOMLIN, Dan, S-585 99 Linköping (SE)
(74) Representative: Willquist, Bo Lorentz
(86) International application number: PCT/SE2002/000759
(87) International publication number: WO 2002/090811

(56) References cited:
- AT-B- 391 931
- DE-A- 2 737 978
- DE-A- 3 641 433
- DE-A- 3 700 726
- SE-B- 459 021
- US-A- 3 921 657
- US-A- 4 538 389

## Description

The present invention relates to a device according to the pre-characterising clause of claim 1.

In order to prevent the spread of fire and combustible gas, buildings must be divided into fire cells, which are separated by structural elements. A fire cell comprises a part of a building, which must meet a certain technical fire classification in relation to other parts of the building and may consist, for example, of one room or an associated group of rooms. In the sphere of fire protection, the spread of fire and combustible gas between different fire cells via the ventilation system is a difficult problem. Protective measures to counter the spread of fire through ventilation ducts include fire insulation and the installation of operatable fire restrictors and/or combustible gas restrictors.

SE-9202896-8 discloses a ventilation duct for passing through a fire cell boundary in a building divided into fire cells. The ventilation duct is a prefabricated duct unit, which comprises an inner pipe and an outer pipe with a fireproof insulation fitted between the said pipes. In its original state the insulation is a formable compound, which when it sets forms a solid insulation, thereby bonding the two pipes to one another and forming a unit, a so-called chassis. A restrictor is furthermore rotatably supported in the inner pipe at mid-length.

AT391931 B discloses a fire closure collar for pipelines, especially ventilation ducts or line ducting through walls, a material that expands sharply under the effect of heat being applied to the inside of a collar designed for connection between pipelines or between a pipeline and a wall duct. The area of the inside of the collar provided with the expandable material is thereby open to the pipeline that is to be shut off, or to the inside thereof. The expansion material and the collar extend beyond the ends of the pipeline connecting sleeves and the axial end areas of the collar are curved towards the pipeline that is to be sealed, so that the end areas thereof bear tightly against the pipeline. In a fire, a choke valve arranged in the pipeline closes first, but as the fire progresses the expandable material expands and seals the line.

Reference is made to US-A-4 538 389 as a further example of the prior art. This discloses a fire restrictor generally having the features encountered in the pre-characterising clause of claim 1 of this application. The design described here, however, has a relatively complicated construction in that, among other things, it is assumed that a fireproof compound must form a tight seal between the body of the pipe and the surrounding collar.

The object of the present invention, in a passage of a ventilation duct through a structural element dividing fire cells, is to provide a device which with simplified installation will afford protection against the spread of fire and combustible gas as specified by the appropriate fire classification. This is achieved by a device according to the present invention, which has the features specified in claim 1.

Further advantages of the device according to the present invention include the fact that it comprises relatively simple, easily produced components, which give the device a low weight, thereby facilitating the assembly work.

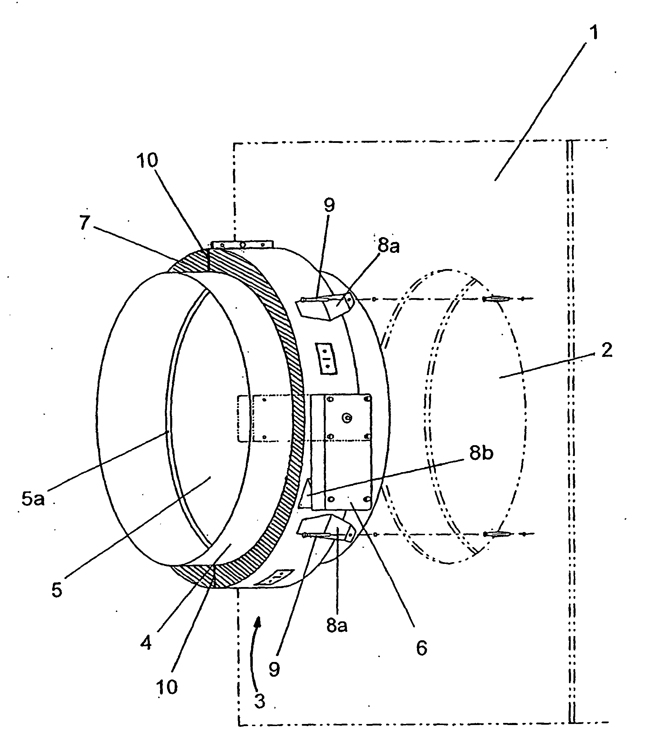

The invention will be explained in more detail below with reference to the drawing attached, which shows a diagrammatic perspective view of one example of a fire restrictor/combustible gas restrictor according to the invention.

In the drawing, 1 denotes a wall, which constitutes a part of building and forms part of a boundary of a fire cell in the building. In the wall 1 is an opening 2, for a ventilation duct (not shown) for example, which extends through the fire cell.

3 generally denotes a fire restrictor and/or combustible gas restrictor according to the invention, inserted into the opening 2. This restrictor 3 comprises a tubular body 4, the outside diameter of which defines the diameter of the opening 2. A restrictor leaf 5 is rotatably supported in the tubular body 4. The shaft 5a of the restrictor leaf 5 is operatively connected directly to the shaft 6a of a control device 6. The function of the control device 6, in this case and electric motor, at a temperature exceeding a predetermined value, is to bring the otherwise open restrictor leaf 5 into the closed position.

As will be seen from the figure in the drawing, the tubular body 4 with the restrictor leaf is intended to be fitted outside the wall 1. The restrictor leaf 5 is conventionally equipped with seals, one of which is made of rubber and intended to provide sealing primarily at temperatures below the predetermined value. The function of another conventional seal, composed of a material that expands rapidly at high temperatures, is to produce secure sealing at the temperatures prevailing in a fire.

According to the invention, the tubular body 4 is surrounded, at least in an area adjoining the closed position of the restrictor leaf 5, by a prefabricated pipe 7 of a so-called fire protection compound. The pipe 7 is situated in direct, open contact with the tubular body 4 and a holder device 8, such as a so-called sheet-metal shroud, is arranged around the pipe 7. This shroud has punched-out fixing lugs 8a, by means of which the restrictor is fixed to the wall 1, for example by means of screws 9, and a motor support 8b for the control device 6.

The prefabricated pipe 7 is preferably assembled from two halves, which are held together by the sheet metal shroud 8, as indicated by lines 10.

Although the invention has been described and shown above in connection with a circular embodiment/it is obvious that square-shaped embodiments can exist, that is to say the valve housing can have a square or rectangular cross-section, without departing from the scope of the invention.

## Claims

1. A fire restrictor and/or combustible gas restrictor (3) adapted for being situated adjoining an opening (2) in a structural element (1), comprising a combination of a body (4) with a restrictor leaf (5) rotatably mounted therein, which is designed at temperatures or smoke levels in excess of a predetermined value to be brought by a control device (6) into a closed position, the restrictor (3) being connectable by the body (4) to the opening (2), said body (4) being surrounded, at least in an area adjoining the closed position of the restrictor leaf (5), by a prefabricated pipe (7) of a fire protection compound in direct contact with the body (4), **characterised in that** a holder device (8) for the pipe (7) of fire protection compound is arranged around the latter.

2. A fire restrictor according to claim 1, **characterised in that** the holder device, the so-called sheet metal shroud (8), is furnished partly with punched-out fixing lugs intended for fixing the body (4) and the restrictor (3) to a wall in the structural element (1), and partly with a motor support intended to support the control device (6) of the restrictor leaf (5).

3. A fire restrictor according to any of the preceding claims, **characterised in that** the prefabricated pipe (7) of fire protection compound is assembled from at least two parts, which are held together by the sheet metal shroud (8).

4. A fire restrictor according to any one of the preceding claims, **characterised in that** the body (4) is a tubular body.

## Patentansprüche

1. Brandabsperrvorrichtung und/oder Absperrvorrichtung (3) für brennbare Gase, die dazu ausgebildet ist, an einer Öffnung (2) in einem Bauelement (1) angebracht zu werden, umfassend eine Kombination aus einem Körper (4) mit einer hierin drehbar befestigten Absperrplatte (5), die dazu ausgestaltet ist, bei Temperaturen oder Rauchgraden, die einen vorbestimmten Wert überschreiten, durch eine Steuervorrichtung (6) in eine geschlossene Stellung überführt zu werden, wobei die Absperreinrichtung (3) durch den Körper (4) mit der Öffnung (2) verbindbar ist, wobei der Körper (4) zumindest in einem Bereich, der der geschlossenen Stellung der Absperrplatte (5) benachbart ist, von einem vorgefertigten Rohr (7) aus einer Feuerschutzverbindung umgeben ist, die direkten Kontakt mit dem Körper (4) hat, **dadurch gekennzeichnet, dass** eine Halteeinrichtung (8) für das aus einer Feuerschutzverbindung bestehende Rohr (7) um letzteres herum angeordnet ist.

2. Brandabsperrvorrichtung nach Anspruch 1, **dadurch gekennzeichnet, dass** die Halteeinrichtung, die sogenannte Blechummantelung (8), teilweise mit ausgestanzten Befestigungslaschen versehen ist, die zum Befestigen des Körpers (4) und der Brandabsperreinrichtung (3) an einer Wand in dem Bauelement (1) bestimmt ist und teilweise mit einer Motorhalterung versehen ist, die dazu bestimmt ist, die Steuervorrichtung (6) der Absperrplatte (5) zu halten.

3. Brandabsperrvorrichtung nach einem der voranstehenden Ansprüche, **dadurch gekennzeichnet, dass** das vorgefertigte Rohr (7) aus Feuerschutzverbindung aus wenigstens zwei Teilen zusammengesetzt ist, die durch die Blechummantelung (8) zusammengehalten wird.

4. Brandabsperrvorrichtung nach einem der voranstehenden Ansprüche, **dadurch gekennzeichnet, dass** der Körper (4) ein rohrförmiger Körper ist.

## Revendications

1. Restricteur de feu et/ou de gaz combustible (3) adapté pour être situé adjacent à une ouverture (2) dans un élément structurel (1), comprenant une combinaison d'un corps (4) avec une lame de restricteur (5) montée de manière pivotante à l'intérieur et qui est conçue à des températures ou des niveaux de fumée dépassant une valeur prédéterminée pour être amenée par un dispositif de commande (6) dans une position fermée, le restricteur (3) pouvant être relié par le corps (4) à l'ouverture (2), ledit corps (4) étant entouré, au moins dans une zone adjacente à la position fermée de la lame de restricteur (5) par un tuyau préfabriqué (7) d'un composé de protection anti-incendie en contact direct avec le corps (4), **caractérisé en ce qu'**un dispositif de maintien (8) pour le tuyau (7) de composé de protection anti-incendie est disposé autour de ce dernier.

2. Restricteur de feu selon la revendication 1, **caractérisé en ce que** le dispositif de maintien, ainsi dénommé flasque en tôle (8), est fourni en partie avec des oreilles de fixation découpées à la matrice destinées à fixer le corps (4) et le restricteur (3) à un mur dans l'élément structurel (1), et en partie avec un support moteur destiné à supporter le dispositif de commande (6) de 1 a lame de restricteur (5).

3. Restricteur de feu selon l'une quelconque des revendications précédentes, **caractérisé en ce que** le tuyau préfabriqué (7) de composé de protection anti-incendie est assemblé à partir de deux parties au moins, qui sont maintenues ensembles par le flasque en tôle (8).

4. Restricteur de feu selon l'une quelconque des revendications précédentes, **caractérisé en ce que** le corps (4) est un corps tubulaire.
